# EUROPÄISCHE PATENTSCHRIFT

(11) **EP 3 634 789 B1**
(45) Veröffentlichungstag und Bekanntmachung des Hinweises auf die Patenterteilung: **07.06.2023**
(21) Anmeldenummer: 18724189.8
(22) Anmeldetag: 07.05.2018
(51) Int. Cl.: B60G 21/055, F16C 35/063, F16C 35/067

(54) **DREHAKTUATOR EINER WANKSTABILISIERUNG FÜR EIN KRAFTFAHRZEUG**
ROTARY ACTUATOR OF A ROLL STABILIZATION SYSTEM FOR A MOTOR VEHICLE
ACTIONNEUR ROTATIF D'UN ANTIROULIS POUR VÉHICULE À MOTEUR

(30) Priorität: 08.06.2017 DE 102017209686
(43) Veröffentlichungstag der Anmeldung: 15.04.2020
(73) Patentinhaber: ZF Friedrichshafen AG, 88046 Friedrichshafen (DE)
(72) Erfinder: SCHWARZE, Rene, 49434 Vörden (DE); GRAEULER, Dirk, 49191 Belm (DE)
(74) Vertreter: ZF Friedrichshafen AG
(86) Internationale Anmeldenummer: PCT/EP2018/061691
(87) Internationale Veröffentlichungsnummer: WO 2018/224226

(56) Entgegenhaltungen:
- WO-A1-98/25772
- DE-A1- 2 603 685
- DE-A1-102013 201 520
- DE-A1-102014 202 829
- DE-A1-102014 205 262
- DE-A1-102015 220 176
- DE-U1- 9 216 915
- US-A- 4 895 462
- US-A- 5 505 547

## Beschreibung

Die Erfindung betrifft einen Drehaktuator einer Wankstabilisierung für ein Kraftfahrzeug nach dem Oberbegriff des Patentanspruches 1.

Es ist bekannt, Getriebewellen gegenüber einem Gehäuse über ein Wälzlager, welches einen auf der Welle angeordneten Innenring und einen im Gehäuse angeordneten Außenring aufweist, zu lagern. Zur axialen Sicherung des Innenringes weist die Welle eine Wellenschulter auf, gegenüber welcher sich der Innenring nach einer Seite hin abstützt, während auf der anderen Seite ein Sicherungselement, beispielsweise ein Sicherungsring, auch Sprengring genannt, in einer Ringnut der Welle angeordnet ist. In ähnlicher Weise wird der Außenring des Wälzlagers im Gehäuse fixiert, wobei ebenfalls ein Sprengring, ausgebildet für eine Ringnut in einer Bohrung, verwendet wird. Derartige Sicherungsringe weisen den Vorteil eines geringen Bauraumbedarfes auf, da sie in axialer Richtung nur eine geringe Breite beanspruchen. Andererseits besteht die Gefahr, dass Sicherungsringe nicht die erforderliche konstante Anpresskraft aufbringen und infolge einer Wanderbewegung aus ihrer Ringnut austreten.

Durch die DE 198 50 169 C1 wurde ein Drehaktuator, auch Schwenkmotor genannt, für eine Wankstabilisierung eines Kraftfahrzeuges bekannt, wobei der Drehaktuator zwischen zwei Hälften eines Stabilisators, ausgebildet als Torsionsstabhälften, angeordnet ist. Der Drehaktuator weist einen Elektromotor sowie ein mehrstufiges Planetengetriebe auf, welches ausgangsseitig mit einer Stabilisatorhälfte drehfest verbunden ist. Das Getriebeausgangsglied, ausgebildet als Planetenträger, ist über Wälzlager gegenüber dem Gehäuse gelagert, wobei Innen- und Außenringe über Sicherungselemente gegenüber dem Planetenträger und dem Gehäuse in axialer Richtung fixiert sind.

Aus DE 10 2014 202 829 A1 ist ein Drehaktuator einer Wankstabilisierung für ein Kraftfahrzeug bekannt. Ein Innenring des dort gezeigten Wälzlagers zur Lagerung des Planetenträgers wird axial durch ein Vorspannelement vorgespannt. Das Vorspannelement umfasst eine Überwurfmutter und ein Federelement. Die Überwurfmutter ist gegen einen Anschlag geschraubt und befindet sich so in einer axial fest definierten Position auf dem Planetenträger, um mittels des Federelements eine definierte Vorspannkraft auf den Innenring auszuüben. Ein Außenring des Wälzlagers weist zwei Kugelrillen auf. Axial daran angrenzend befindet sich ein nicht bezeichnetes Bauteil. Ob und wie der Außenring des Lagers innerhalb des Gehäuses gesichert ist, lässt sich dem Dokument nicht klar entnehmen.

Durch die den Oberbegriff des Anspruchs 1 aufzeigende Patentschrift DE 10 2014 205 261 A1 der Anmelderin wurde ebenfalls ein Schwenkmotor eines Wankstabilisators für Kraftfahrzeuge bekannt, wobei das als Planetenträger ausgebildete Getriebeausgangsglied über ein zweireihiges Schrägkugellager gegenüber dem Gehäuse gelagert und durch Sicherungsringe gegenüber dem Gehäuse axial fixiert ist.

Eine Aufgabe der Erfindung besteht darin, bei einem Drehaktuator der eingangs genannten Art die Sicherung des Wälzlagers weiter zu verbessern.

Die Erfindung umfasst die Merkmale des Patentanspruches 1.

Erfindungsgemäß ist vorgesehen, dass der Außenring des Wälzlagers gegenüber dem Gehäuse des Drehaktuators mittels eines Gewinderinges gesichert wird, wobei das Gehäuse ein Innengewinde und der Gewindering, auch Ringschraube genannt, ein Außengewinde aufweist und in das Gehäuse eingeschraubt werden kann. Durch Wahl des Anzugmomentes des Gewinderinges kann die Vorspannung, welche auf den Außenring wirkt, eingestellt werden. Der Gewindering ist an sich aufgrund seiner Vorspannung gegen Losdrehen gesichert, kann jedoch durch weitere geeignete, an sich bekannte Sicherungsmittel zusätzlich gesichert werden, beispielsweise eine aushärtende Klebemasse. Im Unterschied zu dem bekannten Sicherungsring kann durch den erfindungsgemäßen Gewindering kein Verlust des Sicherungselements auftreten.

Erfindungsgemäß ist das erste Sicherungselement, welches den Innenring auf dem Getriebeausgangsglied sichert, als Sicherungsmutter ausgebildet. Der Innenring des Wälzlagers stützt sich einerseits an einer Wellenschulter ab und wird andererseits durch eine Sicherungsmutter gegen die Wellenschulter gepresst. Auf dem Getriebeausgangsglied ist ein Gewinde angeordnet, auf welches die Sicherungsmutter aufgeschraubt und gesichert wird.

Erfindungsgemäß ist zwischen der Sicherungsmutter und dem Gewindering ein Ring- oder Radialspalt belassen; damit ist sichergestellt, dass beide schraubbaren Sicherungselemente frei gegeneinander verdrehbar sind und andererseits genügend Raum in radialer Richtung vorhanden ist, um ein Werkzeug, z. B. in Form eines Steckschlüssels einzuführen.

Erfindungsgemäß weisen der Gewindering und die Sicherungsmutter ungefähr die gleiche Breite, d. h. die gleiche Erstreckung in axialer Richtung auf. Geht man davon aus, dass der Innenring eines Wälzlagers in der Regel durch eine Sicherungsmutter auf der Welle fixiert wird, so bedeutet die erfindungsgemäße Anordnung eines Gewinderinges mit Außengewinde zur Sicherung des Außenringes keinen zusätzlichen Bauraum.

Erfindungsgemäß weist die Sicherungsmutter ein Außenprofil auf, welches als Mitnahmeprofil für den Eingriff eines Drehwerkzeuges zum Festziehen der Sicherungsmutter ausgebildet ist. Damit wird erreicht, dass die Sicherungsmutter auf einfache Weise montiert werden kann.

Erfindungsgemäß weist der Gewindering ein Innenprofil auf, welches als Mitnahmeprofil für den Eingriff eines weiteren Drehwerkzeuges ausgebildet ist. Damit wird erreicht, dass der Gewindering ebenfalls leicht montiert und mit einem definierten Drehmoment angezogen werden kann. Als weiterer Vorteil ergibt sich die Möglichkeit, sowohl die Sicherungsmutter auf der Welle als auch den Gewindering in der Gehäusebohrung gleichzeitig, d. h. mit einem Werkzeug anzuziehen, wobei das Werkzeug einerseits ein inneres Mitnahmeprofil für die Sicherungsmutter und andererseits ein äußeres Mitnahmeprofil für den Gewindering aufweist.

Erfindungsgemäß ist das Getriebeausgangsglied Teil eines Planetengetriebes des Schwenkmotors respektive des Drehaktuators. Bevorzugt ist das Getriebeausgangsglied als Planetenträger des mehrstufigen Planetengetriebes ausgebildet. Der Planetenträger ist einer erhöhten Belastung durch Radialkräfte und Biegemomente ausgesetzt - dementsprechend ist die Wälzlagerung beanspruchungsgerecht auszulegen und zu sichern. Diese Forderung wird durch den erfindungsgemäßen Gewindering in besonderem Maße erfüllt, womit ein wesentlicher Beitrag für die Sicherheit dieser Komponente einer aktiven Wankstabilisierung geleistet wird.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: einen Axialschnitt einer Lagerung eines Planetenträgers in einem Gehäuse eines Drehaktuators,
- Fig. 2: eine Ansicht in axialer Richtung auf die Sicherungselemente von Innen- und Außenring des Wälzlagers und
- Fig. 3: einen Drehaktuator einer Wankstabilisierung nach dem Stand der Technik.

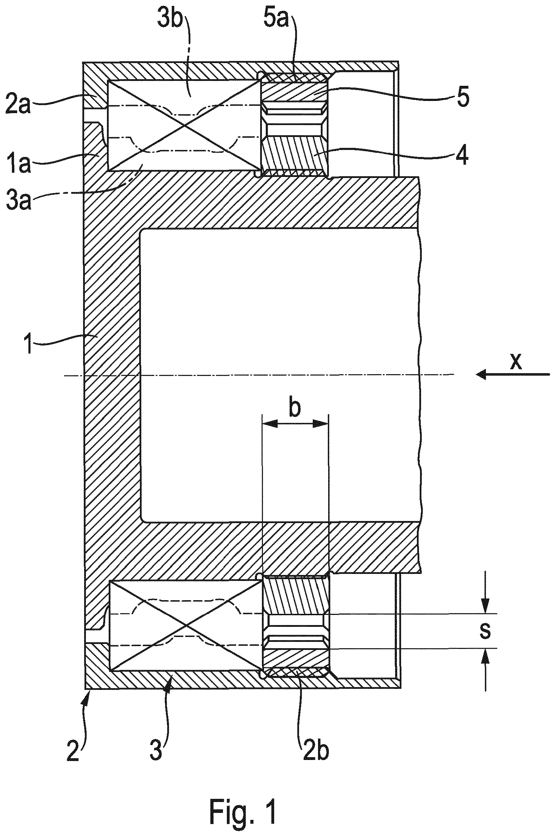

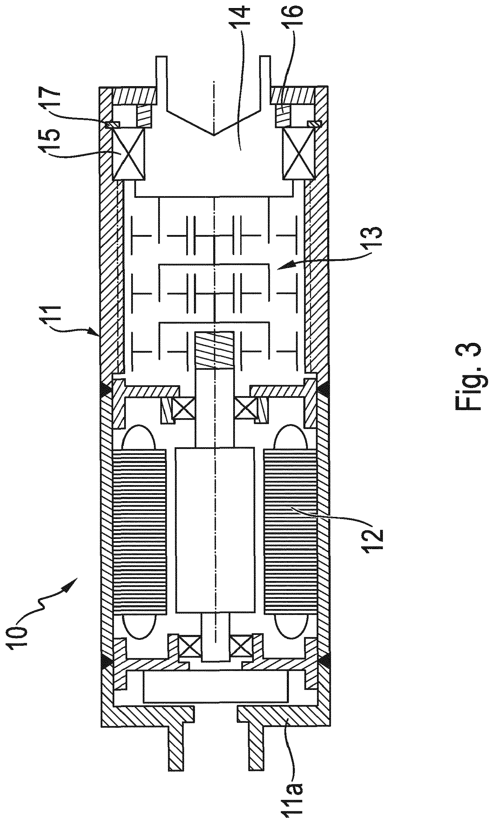

Fig. 1 zeigt eine Anordnung zur Lagerung eines Getriebeausgangsgliedes, insbesondere einer Getriebeausgangswelle 1 in einem Gehäuse 2 mittels eines Wälzlagers 3, ausgebildet als zweireihiges Schrägkugellager 3. Das Gehäuse 2 ist Teil eines Drehaktuators 10, wie er in Fig. 3 dargestellt und unten beschrieben ist, und entspricht dessen Gehäuse 11.Die Getriebeausgangswelle 1 entspricht dem Planetenträger 14 in Fig. 3. Das Wälzlager 3 weist einen Innenring 3a auf, welcher auf der Getriebeausgangswelle 1 angeordnet ist, sowie einen Außenring 3b, welcher in einer Bohrung (ohne Bezugszahl) des Gehäuses 2 angeordnet ist. Das Getriebeausgangsglied 1 weist eine Schulter 1a auf, an welcher sich der Innenring 3a in axialer Richtung abstützt. Durch ein erstes Sicherungselement 4, ausgebildet als Sicherungsmutter 4, welche auf die Getriebeausgangswelle 1 aufgeschraubt ist, wird der Innenring 3a in axialer Richtung fixiert. Das Gehäuse 2 weist einen Anschlag 2a auf, an welchem der Außenring 3b anliegt. Ein zweites Sicherungselement 5, ausgebildet als Gewindering 5 mit einem Außengewinde 5a, ist in ein Innengewinde 2a des Gehäuses 2 eingeschraubt und verspannt den Außenring 3b gegenüber dem Anschlag 2a. Der Innenring 3a ist somit in axialer Richtung auf dem Getriebeausgangsglied 1 und der Außenring 3b gegenüber dem Gehäuse 2 in axialer Richtung fixiert. Zwischen der Sicherungsmutter 4 und dem Gewindering 5 ist ein Ringspalt s belassen, in welchen ein nicht dargestelltes Drehwerkzeug zum Anziehen der Sicherungselemente 4, 5 zwecks Erzeugung einer Vorspannung einführbar ist. Beide Sicherungselemente, d. h. die Sicherungsmutter 4 und der Gewindering 5, auch Ringschraube 5 genannt, weisen etwa die gleiche Breite b auf, insofern benötigen beide koaxial angeordneten Sicherungselemente 4, 5 denselben Bauraum in axialer Richtung.

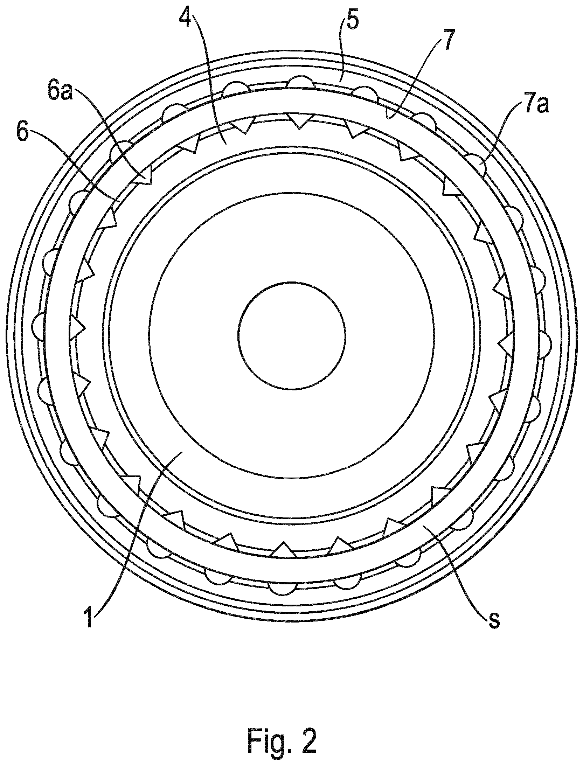

Fig. 2 zeigt eine Ansicht in axialer Richtung, d. h. in Richtung des Pfeils X in Fig. 1 auf die Lageranordnung mit dem Gewindering 5 und der Sicherungsmutter 4, zwischen denen der Ringspalt s belassen ist. Die Sicherungsmutter 4 weist ein als Mitnahmeprofil ausgebildetes Außenprofil 6 auf, welches - nach einer bevorzugten Ausführungsform - eine Vielzahl von spitzwinkligen, in Axialrichtung verlaufenden Kerben 6a, Spitzkerben 6a, aufweist. Der Gewindering 5 weist ein als Mitnahmeprofil ausgebildetes Innenprofil 7 auf, welches - nach einer bevorzugten Ausführungsform - eine Vielzahl von halbkreisförmig ausgebildeten Kerben 7a, Rundkerben 7a, aufweist. Das Außenprofil 6 und das Innenprofil 7 dienen der Herstellung einer formschlüssigen Verbindung mit einem entsprechend profilierten Werkzeug, mit dem die Sicherungselemente gegenüber dem Innen- bzw. dem Außenring verschraubt und verspannt werden. Nach einer bevorzugten Ausführungsform kann ein einziges Werkzeug für beide Sicherungselemente 4, 5 verwendet werden. Die Kerben 6a, 7a können hinsichtlich ihrer Form durch andere Profilelemente ersetzt werden.

Fig. 3 zeigt einen Drehaktuator 10, auch Schwenkmotor 10 genannt, nach dem Stand der Technik, bekannt durch die eingangs genannte DE 10 2014 205 261 A1 der Anmelderin. Der Schwenkmotor 10 weist ein etwa zylinderförmig ausgebildetes Gehäuse 11 auf, in welchem ein Elektromotor 12 und ein mehrstufiges Planetengetriebe 13 angeordnet sind. Das Planetengetriebe 13, welches durch den Elektromotor 12 antreibbar ist, weist ein als Planetenträger 14 ausgebildetes Getriebeausgangsglied 14 auf, welches - was nicht dargestellt ist - mit einer ersten Stabilisatorhälfte verbunden wird. Die zweite Stabilisatorhälfte (nicht dargestellt) ist mit der Stirnseite 11a des Gehäuses 11 verbunden. Der Planetenträger 14 ist über ein zweireihiges Schrägkugellager 15 gegenüber dem Gehäuse 11 gelagert und über ein erstes Sicherungselement 16 gegenüber dem Planetenträger 14 und ein zweites Sicherungselement 17 gegenüber dem Gehäuse 11 axial fixiert.

Erfindungsgemäß werden die Sicherungselemente 16, 17 nach dem Stand der Technik gemäß Fig. 3 ersetzt durch die erfindungsgemäßen Sicherungselemente 4 und 5. Dabei entsprechen - wie oben erwähnt - das Getriebeausgangsglied 1 dem Planetenträger 14, das Gehäuse 2 dem Gehäuse 11 und das Wälzlager 3 dem Schrägkugellager 15. Die Lageranordnung gemäß Fig. 1 und Fig. 2, insbesondere mit dem zweiten als Gewindering 5 ausgebildeten Sicherungselement 5 ist damit Teil des Drehaktuators 10 einer aktiven Wankstabilisierung eines Kraftfahrzeuges gemäß Fig. 3.

### Bezugszeichen

- 1: Getriebeausgangsglied
- 1a: Schulter
- 2: Gehäuse
- 2a: Anschlag/Gehäuse
- 2b: Innengewinde/Gehäuse
- 3: Wälzlager
- 3a: Innenring
- 3b: Außenring
- 4: erstes Sicherungselement/Sicherungsmutter
- 5: zweites Sicherungselement/Gewindering
- 6: Außenprofil
- 6a: Spitzkerbe
- 7: Innenprofil
- 7a: Rundkerbe

- 10: Drehaktuator/Schwenkmotor
- 11: Gehäuse
- 11a: Stirnseite
- 12: Elektromotor
- 13: Planetengetriebe
- 14: Planetenträger
- 15: Wälzlager
- 16: erstes Sicherungselement
- 17: zweites Sicherungselement

- s: Ringspalt
- b: Breite der Sicherungselemente

## Patentansprüche

1. Drehaktuator für eine Wankstabilisierung für ein Kraftfahrzeug, wobei der Drehaktuator ein Wälzlager, eine Anordnung zur Sicherung des Wälzlagers (3), ein Gehäuse (2) und ein Getriebeausgangsglied umfasst, das Wälzlager aufweisend einen Innenring (3a) und einen Außenring (3b), wobei sich in dem Gehäuse (2) die Anordnung zur Lagerung des Getriebeausgangsglieds mittels des Wälzlagers befindet, wobei der Innenring (3a) auf einem Getriebeausgangsglied (1) angeordnet und durch ein erstes Sicherungselement (4) axial fixiert und der Außenring (3b) in einer Bohrung des Gehäuses (2) angeordnet und durch ein zweites Sicherungselement (5) axial fixiert ist, wobei am Gehäuse (2) ein Anschlag (2a) ausgebildet ist, an dem der Außenring (3b) anliegt, wobei das Getriebeausgangsglied (1) als Planetenträger eines Planetengetriebes des Drehaktuators in Form einer Getriebeausgangswelle ausgebildet ist und eine Schulter (1a) aufweist, an welcher sich der Innenring (3a) in axialer Richtung abstützt, **dadurch gekennzeichnet, dass** das erste Sicherungselement (4) als Sicherungsmutter ausgebildet ist, welche auf die Getriebeausgangswelle (1) aufgeschraubt ist, wobei das zweite Sicherungselement als Gewindering (5) mit einem Außengewinde (5a) ausgebildet ist, wobei im Gehäuse (2) ein Innengewinde (2b) angeordnet ist und wobei der Gewindering (5) in das Innengewinde (2b) des Gehäuses (2) einschraubbar und gegen den Außenring (3b) verspannbar ist, um den Außenring (3b) gegenüber dem Anschlag (2a) zu verspannen, wobei zwischen dem ersten Sicherungselement (4) und dem Gewindering (5) ein Ringspalt (s) belassen ist, in welchen ein Drehwerkzeug zum Anziehen der Sicherungselemente (4, 5) zwecks Erzeugung einer Vorspannung einführbar ist, wobei beide Sicherungselemente (4, 5) etwa die gleiche Breite (b) aufweisen, und wobei die Sicherungsmutter (4) ein als Mitnahmeprofil ausgebildetes Außenprofil und der Gewindering (5) ein als Mitnahmeprofil ausgebildetes Innenprofil aufweist.

## Claims

1. Rotary actuator for a roll stabilization system for a motor vehicle, wherein the rotary actuator comprises a roller bearing, an arrangement for securing the roller bearing (3), a housing (2) and a transmission output element, the roller bearing having an inner ring (3a) and an outer ring (3b), wherein the arrangement for mounting the transmission output element by means of the roller bearing is located in the housing (2), wherein the inner ring (3a) is arranged on a transmission output element (1) and is fixed axially by a first securing element (4), and the outer ring (3b) is arranged in a hole in the housing (2) and is fixed axially by a second securing element (5), wherein a stop (2a) on which the outer ring (3b) rests is formed on the housing (2), wherein the transmission output element (1) is formed as a planet carrier of a planetary gear of the rotary actuator in the form of a transmission output shaft and has a shoulder (1a) on which the inner ring (3a) is supported in the axial direction,
**characterized in that** the first securing element (4) is formed as a lock nut which is screwed onto the transmission output shaft (1),
wherein the second securing element is formed as a threaded ring (5) having an external thread (5a), wherein an internal thread (2b) is arranged in the housing (2), and wherein the threaded ring (5) can be screwed into the internal thread (2b) of the housing (2) and braced against the outer ring (3b) in order to brace the outer ring (3b) with respect to the stop (2a), wherein an annular gap (s) is left between the first securing element (4) and the threaded ring (5), into which gap a rotary tool for tightening the securing elements (4, 5) can be inserted for the purpose of producing a pre-load, wherein the two securing elements (4, 5) have approximately the same width (b), and wherein the lock nut (4) has an outer profile formed as a driver profile, and the threaded ring (5) has an inner profile formed as a driver profile.

## Revendications

1. Actionneur rotatif pour un système antiroulis pour un véhicule automobile, dans lequel l'actionneur rotatif comprend un palier à roulement, un agencement permettant de bloquer le palier à roulement (3), un boîtier (2) et un élément de sortie de transmission, le palier à roulement présentant une bague intérieure (3a) et une bague extérieure (3b), dans lequel l'agencement servant à monter l'élément de sortie de transmission au moyen du palier à roulement se trouve dans le boîtier (2), dans lequel la bague intérieure (3a) est disposée sur un élément de sortie de transmission (1) et est fixée axialement par un premier élément de blocage (4), et la bague extérieure (3b) est disposée dans un alésage du boîtier (2) et est fixée axialement par un deuxième élément de blocage (5), dans lequel une butée (2a) contre laquelle s'applique la bague extérieure (3b) est réalisée sur le boîtier (2), dans lequel l'élément de sortie de transmission (1) est réalisé comme un porte-satellites d'un engrenage planétaire de l'actionneur rotatif sous la forme d'un arbre de sortie de transmission et présente un épaulement (1a) sur lequel la bague intérieure (3a) prend appui dans la direction axiale,
**caractérisé en ce que** le premier élément de blocage (4) est réalisé comme un écrou de blocage qui se visse sur l'arbre de sortie de transmission (1),
dans lequel le deuxième élément de blocage est réalisé comme une bague filetée (5) pourvue d'un filetage extérieur (5a), dans lequel un filetage intérieur (2b) est disposé dans le boîtier (2), et dans lequel la bague filetée (5) peut être vissée dans le filetage intérieur (2b) du boîtier (2) et peut être mise en tension contre la bague extérieure (3b) afin de mettre en tension la bague extérieure (3b) par rapport à la butée (2a), dans lequel il reste un espace annulaire (s) entre le premier élément de blocage (4) et la bague filetée (5) dans lequel un outil rotatif peut être introduit pour serrer les éléments de blocage (4, 5) en vue de créer une précontrainte, dans lequel les deux éléments de blocage (4, 5) présentent approximativement la même largeur (b), et dans lequel l'écrou de blocage (4) présente un profil extérieur réalisé comme un profil d'entraînement et la bague filetée (5) présente un profil intérieur réalisé comme un profil d'entraînement.
